# EUROPEAN PATENT SPECIFICATION

(11) **EP 2 414 437 B1**
(45) Date of publication and mention of the grant of the patent: **19.04.2017**
(21) Application number: 10722848.8
(22) Date of filing: 30.03.2010
(51) Int. Cl.: C08J 3/12, C08L 1/28, C12H 1/12

(54) **TARTARIC SALT STABILIZER FOR WINE**
WEINSÄURESALZSTABILISATOR FÜR WEIN
STABILISANT POUR VIN À BASE DE SEL TARTRIQUE

(30) Priority: 31.03.2009 US 164949 P
(43) Date of publication of application: 08.02.2012
(73) Proprietor: Dow Global Technologies LLC, Midland, MI 48674 (US)
(72) Inventor: HUEBNER, Britta, NI 31311 Uetze (DE); ADDEN, Roland, NI 30161 Hannover (DE); PRETESACQUE, Stephanie, F-92160 Antony (FR)
(74) Representative: f & e patent
(86) International application number: PCT/US2010/029198
(87) International publication number: WO 2010/117783

(56) References cited:
- WO-A2-2004/106415
- DE-A1-102005 004 893
- US-A1- 2008 107 784
- DATABASE WPI Thomson Scientific, London, GB; AN 1997-161507 XP002592088 "Granulating carboxymethyl cellulose ether alkali salt (CMC) - by pulverising block CMC in hydrated isopropyl alcohol to granulate in liq." & JP 09 031102 A (DAI ICHI KOGYO SEIYAKU CO LTD) 4 February 1997 (1997-02-04)
- CRACHEREAU J C ET AL: "Tartaric stabilisation of wines by carboxymethylcellulose (C.M.C.)." BULLETIN DE L'O.I.V. 2001, vol. 74, no. 841/842, 2001, pages 151-159, XP002592080 CHAMBRE D'AGRIC. DE LA GIRONDE -- SERVICE VIN, 39 RUE MICHEL MONTAIGNE, 33290 BLANQUEFORT, FRANCE
- WUCHERPFENNIG K ET AL: "Effect of colloids on crystallization of tartrate, with special consideration of stabilization of wine by means of carboxymethylcellulose. (translated) TIOL- Einfluss von Kolloiden auf die Weinsteinkristallisation, unter besonderer Beruecksichtigung der Weinsteinstabilisierung durch Carboxymethylcel" WEINWIRTSCHAFT-TECHNIK 1984 INST. FUER WEINCHEMIE & GETRAENKEFORSCHUNG, FORSCHUNGSANSTALT FUER WEINBAU, GARTENBAU, GETRAENKETECH. & LANDESPFLEGE, GEISENHEIM, FEDERAL REPUBLIC OF GERMANY, vol. 120, no. 1, 1984, page 13, XP009136224

## Description

### Field

The present application relates to processes for stabilizing wine.

### Background

Tartaric stabilization is a technical challenge in wine making. Tartrate crystals (typically potassium bitartrate or calcium tartrate) develop naturally in bottled wine, and while tasteless and safe for consumption, they present aesthetics concerns and can be misperceived as contaminants by consumers. Moreover, for sparkling wines, crystals can cause an excessive loss of product when the bottles are opened.

The Organisation Internationale de La Vigne et du Vin (OIV) has approved several ways to stabilize wine, for example, refrigeration, membrane separation, electrodialysis, and additive technologies. Additives include cream of tartar (potassium hydrogen tartrate), metatartric acid, yeast mannoproteins, and carboxymethylcelluloses. Carboxymethyl cellulose ("CMC") is a cellulose derivative created by treatment of cellulosic fibers with caustic solution, followed by chloroacetic acid, which yields cellulose ethers substituted with carboxymethyl groups.

In 2008, the OIV approved carboxmethylcellulose (Resolution OENO 2/2008) for physio-chemical stabilization of white and sparkling wine. In 2009, the OIV's Resolution OIV/OENO 366/2009 added a monograph to the international Oenological Codex. Among other things, Resolution OIV/OENO 366/2009 provided for the addition of CMC "in the form of a concentrate for solution in wine prior to use. Solutions must contain at least 3.5 % carboxmethylcellulose." This statement is believed to be due to the state of the art understanding at the time that dissolution of powdered CMC would not occur in wine without lump formation or unacceptably high shear.

WO 2004/106415 A2 relates to a procedure for the preparation of granulated carboxymethyl cellulose which dissolves rapidly in water. JP 9031102 (A) discloses a method for granulating carboxymethyl cellulose ether alkali salt to obtain granular CMC of high bulk density. Crachereau, J. C. et al. (Bulletin de L'O.I. V. 2001, 841-842) describe the addition of solutions of CMC to wine in order to improve tartaric stability. K. Wucherpfennig et al. (Die Weinwirtschaft Technik 1984, 1, 13-23) describe the influence of colloidal substances on crystallization of tartrates. US 2008/0107784 A1 describes a process to improve activity of a mannoprotein as wine stabilizer. DE 10 2005 004 893 A1 describes methods for shaping cellulose ethers.

As a matter of background, dissolution is frequently described as a process with two overlapping phenomena, dispersion and hydration. Dispersion refers to spreading of particles or groups of polymer chains throughout the solution. Hydration refers to loosening of the polymer chains and expansion of their hydrodynamic volume (and corresponding viscosity buildup). If dispersion is poor, or if hydration outpaces dispersion, hydrated polymer can swell and isolate relatively dry, non-hydrated polymer from the solution, forming lumps.

Good wine making practice has historically discouraged addition of aqueous solutions to wine, and some jurisdictions have strictly regulated when water may be added to wine. As can be appreciated, there may be a visceral reluctance among winemakers to adopt aqueous solutions of CMC.

Thus, what is needed is a CMC that shows desirable dispersion and hydration in wine when added as a powder.

### Summary

In one embodiment, the present invention provides tartaric salt stabilizers for wine, comprising carboxymethyl cellulose agglomerates having a residual water content of less than 10% by weight and which readily disperse in wine without formation of lumps, wherein the carboxymethyl cellulose agglomerates have been produced by a process comprising introducing raw carboxymethyl cellulose into a high shear mixer, adding at least 20 percent water by weight to the carboxymethyl cellulose without additional surface treatment additives, forming carboxymethyl cellulose agglomerates and drying the agglomerates by non-contact drying means.

### Detailed Description

In one embodiment, the present invention provides tartaric salt stabilizers for wine, comprising carboxymethyl cellulose agglomerates which, in dry form, readily disperse in wine without formation of lumps, wherein the carboxymethyl cellulose agglomerates have been produced by the process described in further detail below.

"Carboxymethyl cellulose agglomerates" refers to CMC that has been produced by a process for producing an "instantized" carboxymethyl cellulose, comprising introducing raw carboxymethyl cellulose into a high shear mixer, adding at least 20 percent water by weight to the carboxymethyl cellulose without additional surface treatment additives, forming carboxymethyl cellulose agglomerates, and drying the agglomerates by non-contact drying means to form the instantized carboxymethyl cellulose. In a preferred embodiment, the introduction step is in a continuous process, but the process may be carried out in a batch or semi-batch process in alternative embodiments.

The term "instantized carboxymethyl cellulose" refers to a CMC which exhibits improved dispersibility in aqueous solutions. The step of introducing carboxymethyl cellulose into a high shear mixer refers to unprocessed, raw material CMC. In one embodiment, the raw material CMCs have a viscosity of about 1 to about 120,000 mPa/s for a two percent solution by weight at 25°C. For example, a relatively low viscosity 30 mPa/s CMC is commercially available from The Dow Chemical Company under the tradename WALOCEL CRT 30; a medium viscosity 2000 mPa/s CMC is commercially available from The Dow Chemical Company under the tradename WALOCEL CRT 2000; and, a relatively high viscosity 40,000 mPa/s CMC is commercially available from The Dow Chemical Company under the tradename WALOCEL CRT 40000.

Some carboxymethyl cellulose features, like degree of substitution, remain constant throughout the process. The term "DS" refers to the degree of carboxymethyl substitution per anhydroglucose unit. All CMC grades are contemplated, thus the DS may be from about 0.5 to about 1.4, preferably from about 0.6 to about 1.0, and more preferably, the DS is about 0.7 to about 0.9.

Physical features of carboxymethyl cellulose, however, will be changed by the currently described process. Raw material CMC has a bulk density of about 550 to about 800 g/L, and an angle of repose of about 41° to about 42°, and thus has excellent flowability, however, raw material CMC is not generally considered dispersible in aqueous solutions at room temperature and is very slow to hydrate. Raw material CMC also retains a large percentage of dust, i.e., particles with less than a 63 micron particle size.

One conventional way to make raw material CMC more dispersible in aqueous solutions at room temperature and improve hydration is to process the raw material CMC in a fluid bed agglomerator. However, as will be shown in the Examples, this has the deleterious effect of lowering the bulk density and increasing the angle of repose, which in turn decreases flowability.

Contemplated high shear mixers include ring layer mixers, Ploughshare mixers, Schugi mixers, and Turbulizer mixers. In a preferred embodiment, the high shear mixer is a ring layer mixer. A ring layer mixer generally comprises a horizontal drum with a mixing shaft axially disposed in it. The mixing shaft has blades, bolts, and/or paddles protruding from it. Mixing shaft geometry can create various mixing zones for transporting, dispersing, mixing, and the like. The product to be mixed forms a concentric ring via centrifugal force, and moves through the mixer in plug-like flow. Liquid is added through a hollow shaft or by injection through special perforated mixing tools. The residence time varies with rpms, flow rate, amount of material, drum length, and selected mixing shaft geometry. A suitable ring layer mixer can be procured from Loedige (Paderborn, Germany), under the tradename CORIMIX CM 20.

In an alternative embodiment of the present invention, the high shear mixers can be replaced by a flow jet mixer.

In one embodiment, the process step of adding at least 20 percent water by weight to the carboxymethyl cellulose without additional surface treatment additives can include adding, without additional surface treatment additives, at least 25, or at least 30, or, if conditions are selected to discourage granulation, at least 35 percent water by weight to the carboxymethyl cellulose. Previous methods required the use of surface treatment additives, for example, salts, sugars, surfactants, and/or glycols. It has now been surprisingly found that the present process can achieve excellent results without surface treatment additives.

Typically, those skilled in the art seek to minimize agglomeration and encourage granulation. It has now been surprisingly found that the present process can achieve excellent results by proceeding contrary to the conventional wisdom. Accordingly, in one embodiment, the process further comprises adjusting the residence time in the ring layer mixer, for example, rpms and mixing shaft geometry, to encourage agglomeration of the carboxymethyl cellulose. In one embodiment, the process further comprises adjusting the spray rate and residence time in the ring layer mixer to discourage granulation of the carboxymethyl cellulose.

The step of drying the agglomerates by non-contact drying means, in one embodiment, includes those where the non-contact drying means is a fluid bed dryer. In one embodiment, the present invention provides a further step, comprising drying the carboxymethyl cellulose at a temperature of more than about 50°C, preferably about 70°C. Alternatively, the carboxymethyl cellulose is dried to a residual water content of less than about 10% by weight, irrespective of temperature (hereinafter "dry form", it being understood that CMC is hydroscopic).

In one embodiment, the instantized carboxymethyl cellulose disperses well with minimal lumps visible. In one embodiment, the instantized carboxymethyl cellulose hydrates quickly, with times to 50% viscosity of less than a minute, times to 90% viscosity of less than 8 minutes, preferably less than 6 minutes, and times to 95% viscosity of less than 15 minutes. As can be appreciated, the higher the raw material viscosity, the longer the viscosity build up (the time in min where the given % of the final torque was obtained).

In one embodiment, the instantized carboxymethyl cellulose has a bulk density that is at least 70% of the raw material CMC's bulk density, preferably at least 72%, preferably at least 74%, preferably at least 76%, preferably at least 78%, and most preferably at least 80%.

In one embodiment, the instantized carboxymethyl cellulose has an angle of repose that is only 5% greater than, preferably substantially the same as, and more preferably, less than the raw material CMC's angle of repose. In one embodiment, the instantized carboxymethyl cellulose has a bulk density/angle of repose that is greater than 9.

In one embodiment, the instantized carboxymethyl cellulose has significantly reduced dust as compared to the raw material.

The inventive instantized carboxymethyl cellulose is useful in any conventional application requiring carboxymethyl cellulose where improved dispersion and hydration, improved flowability, and/or lower dust content, is beneficial.

In particular, the inventive instantized carboxymethyl cellulose is useful in methods of stabilizing wine (including red wines, white wines, sparkling wines) to prevent tartaric salt formation. Concentrations of greater than about 5 mg/L, greater than about 10 mg/L, greater than about 15 mg/L, greater than about 25 mg/L, greater than about 35 mg/L, greater than about 45 mg/L, and greater than about 50 mg/L are preferred, with concentrations of less than about 100 mg/L, less than about 150 mg/L, less than about 200 mg/L, and less than about 300 mg/L preferred.

### Examples

The following examples are for illustrative purposes only and are not intended to limit the scope of the present invention.

### Example 1

Exemplary instantized carboxymethyl celluloses according to the present invention are created as follows. The starting material (raw CMC) is fed continuously in the ring-layer mixer (CORIMIX CM 20) running at a flow rate of approximately 3000rpm. Alternatively, acceptable residence time can be achieved by adjusting tip speed or Froude number. Water is sprayed in the mixer on the product. Older systems use injection of the water through the jacket, whereas newer systems spray through the fast rotating axle. Sufficient water is added so that the wetted agglomerate leaving the mixer has a moisture content of approximately 25-30%. The obtained agglomerate is subsequently dried in a fluid bed dryer (Huettlin Mycrolab) at an air inlet temperature of 50-120°C, preferably 70°C, until the product has reached a temperature of approximately 52°C. A summary of conditions is recited in TABLE 1.

**TABLE 1**

| **Starting material** | **Water %** | **RLM rpm** | **RLM CE flow (kg/h)** | **Drying Temp (°C)** | **Product Temp (°C)** |
|---|---|---|---|---|---|
| CRT 30 CMC | 30 | 3000 | 150 | 70 | 52 |
| CRT 2000 CMC | 30 | 3000 | 150 | 70 | 52 |
| CRT 40000 CMC | 30 | 3000 | 150 | 70 | 52 |

### Example 2 (Comparative)

Comparative instantized carboxymethyl cellulose are created as follows. The starting material is made in a batch process in the fluid bed processor. After conventionally fluidizing the material, water is top sprayed through a nozzle on the fluidized material. The air inlet temperature is held constant at approximately 50°C during spraying while the product temperature is approximately 35°C. The addition of water is stopped when the ratio of added water / (sum of added water and CMC) is 0.25 or 0.3.

The obtained agglomerate is subsequently dried in a fluid bed dryer (Huettlin Mycrolab) at an air inlet temperature of 70°C until the product has reached a temperature of approx. 52°C. A summary of conditions is recited in TABLE 2.

**TABLE 2 (Comparative)**

| **Starting material** | **Water %** | **FBA air inlet (°C)** | **FBA product (°C)** | **Drying Temp (°C)** | **Product Temp (°C)** |
|---|---|---|---|---|---|
| CRT 30 CMC | 25 | 50 | 35 | 70 | 52 |
| CRT 2000 CMC | 30 | 50 | 33 | 70 | 52 |
| CRT 40000 CMC | 30 | 50 | 28 | 70 | 52 |

### Example 3

Batches 1-3 were created substantially according to the protocol of Example 1, and are characterized with the results being recited in TABLE 3.

**TABLE 3**

| | **Bulk density (g/L)** | **Dust (% <63µm)** | **Angle of repose (°)** | **Dispersibility** | **Powder Flow (g/min)** | **Time to 90% visc. (min)** |
|---|---|---|---|---|---|---|
| Batch 1 | 531 | 5.1 | 40.0 | good | 96.7 | 2 |
| Batch 2 | 480 | 7.0 | 42.3 | good | 88.8 | 5 |
| Batch 3 | 404 | 17.4 | 42.7 | good | 51.7 | 6 |

The bulk density is determined by weighing a completely filled beaker of known volume. Values given are average values of three measurements. The dust content is the fraction smaller than 63µm after sieving the product accordingly.

The angle of repose is determined with a Hosokawa Micron Powder Characteristics Tester (model PT-R, 1999, software version 1.02) at an vibration adjustment of ~2.5.

The powder flow speed is measured with the same instrument, using the same method and the same vibration adjustment, as flow by weight through the system for 20 seconds. After the flow becomes consistent, three measurements are combined and averaged.

The dispersibility is tested in a beaker, 0.5 g of the final product is dispersed in a beaker containing 49.5g water (yielding a 1 weight % solution) stirring at 500-750 rpm. Directly after dispersion, a visual assessment is made by a trained technician to determine the quality of the solution, whether lumps can be seen, and how well the sample is distributed throughout the entire solution. The viscosity build up is measured by analyzing the torque over the time (using a Haake VT 550 viscometer) at 600 rpm for 30 min. The torque data of the last 5 min of the measurement were averaged and defined as final torque level. 90% viscosity build up was defined as the time in min where 90% of the final torque was obtained. 50% viscosity build up was less than a minute for all samples, and 95% viscosity build up was reached at 4, 10, and 14 minutes for Batches A, B, and C respectively.

### Example 4 (Comparative)

Comparative Batches A-C were created substantially according to the protocol of Example 2, and are characterized below, along with the raw material (without processing). The results are recited in TABLE 4.

**TABLE 4 (Comparative)**

| | **Bulk density (g/L)** | **Dust (% <63µm)** | **Angle of repose (°)** | **Dispersibility** | **Time to 90% visc.** |
|---|---|---|---|---|---|
| CRT 30 CMC | 658 | 46.9 | 41.0 | Not dispersible | 9 |
| CRT 2000 CMC | 650 | 49.7 | 41.6 | Not dispersible | 17 |
| CRT 40000 CMC | 559 | 65.7 | 41.8 | Not dispersible | 19 |
| Batch A | 258 | 13.6 | 48.2 | Very good | 0.6 |
| Batch B | 295 | 14.9 | 49.4 | Very good | 3 |
| Batch C | 232 | 11.1 | 49.4 | Very good | 8 |

Using a Hosokawa Micron Powder Characteristics Tester, the powder flow speed was measured as flow by weight through the system for 20 seconds. After the flow becomes consistent, three measurements are combined and averaged. Batch A had a flow of 23.2 g/min. Batch B had a flow of 17.1 g/min. Batch C had a flow of 17.7 g/min. As can be seen, fluid bed agglomeration (comparative Batches A-C) resulted in excellent dispersibility, but very poor flowability as compared with the results from TABLE 3. Accordingly, inventive Batches 1-3 show desirable dispersion, hydration, and dust content, yet exhibits improved flowability.

### Example 5

Carboxymethyl cellulose agglomerates in dry form, substantially similar to Batch 1 above, were hydrated at 400 rpm in white wine at a concentration of 5% at 20°C. No lumps were visible, displaying excellent dissolution properties. This is beneficial, as first, no water is added to the wine, and second, no high shear equipment is needed. It is believed that high shear in the wine would be unacceptable as volatile molecules affecting the taste and bouquet of the wine would be undesirably oxidized by high shear. In practice, wine with relatively high concentrations of the inventive CMC can be made, and then added to containers of wine to adjust to the desired concentration. Subsequent tests varying percent fines showed acceptable dissolution with up to 20% dust (particles with less than a 63 micron particle size).

In comparison, CRT 30 CMC (a commercially available grade of CMC) does not dissolve and forms lumps in white wine at 400 rpm.

## Claims

1. A tartaric salt stabilizer for wine, comprising carboxymethyl cellulose agglomerates having a residual water content of less than 10% by weight and which readily disperse in wine without formation of lumps, wherein the carboxymethyl cellulose agglomerates have been produced by a process comprising introducing raw carboxymethyl cellulose into a high shear mixer, adding at least 20 percent water by weight to the carboxymethyl cellulose without additional surface treatment additives, forming carboxymethyl cellulose agglomerates and drying the agglomerates by non-contact drying means.

2. The tartaric salt stabilizer of claim 1, wherein the carboxymethyl cellulose agglomerates have a DS of 0.4 to 1.4.

3. The tartaric salt stabilizer of claim 1 or 2, wherein the carboxymethyl cellulose agglomerates have a bulk density that is greater than 350 g/L.

4. The tartaric salt stabilizer of claim 3 wherein the carboxymethyl cellulose agglomerates have a bulk density that is greater 400 g/L.

5. The tartaric salt stabilizer of any one of claims 1 to 4, wherein the carboxymethyl cellulose agglomerates have an angle of repose that is less than 47.

6. The tartaric salt stabilizer of claim 5, wherein the carboxymethyl cellulose agglomerates have an angle of repose that is less than 45.

7. The tartaric salt stabilizer of claim 6, wherein the carboxymethyl cellulose agglomerates have an angle of repose that is less than 43.

8. The tartaric salt stabilizer of any one of claims 1 to 7, wherein the carboxymethyl cellulose agglomerates have ratio of bulk density, measured in g/l, to the angle of repose, given in °, that is greater than 8.

9. A method of stabilizing wine to prevent tartaric salt formation, comprising adding carboxymethyl cellulose agglomerates to the wine, wherein the carboxymethyl cellulose agglomerates have a residual water content of less than 10% by weight and have been produced by a process comprising introducing raw carboxymethyl cellulose into a high shear mixer, adding at least 20 percent water by weight to the carboxymethyl cellulose without additional surface treatment additives, forming carboxymethyl cellulose agglomerates and drying the agglomerates by non-contact drying means.

## Patentansprüche

1. Ein Weinsteinstabilisator für Wein umfassend Carboxymethylcelluloseagglomerate mit einem Restwassergehalt von weniger als 10 Gew.-%, die bereitwillig in Wein ohne Bildung von Klümpchen dispergieren, wobei die Carboxymethylcelluloseagglomerate mit Hilfe eines Verfahrens, welches das Einbringen einer unbehandelten Carboxymethylcellulose in einen Mischer mit hoher Scherung, Zugabe von mindestens 20 Gew.-% Wasser zu der Carboxymethylcellulose ohne zusätzliche Oberflächenbehandlungs-additive, Bilden von Carboxymethylcelluloseagglomeraten und Trocknen der Agglomerate durch kontaktlose Trocknungsmaßnahmen umfasst, erhalten werden.

2. Der Weinsteinstabilisator gemäß Anspruch 1, wobei die Carboxymethylcelluloseagglomerate einen Substitutionsgrad (DS) von 0,4 bis 1,4 haben.

3. Der Weinsteinstabilisator gemäß Anspruch 1 oder 2, wobei die Carboxymethylcelluloseagglomerate eine Schüttdichte aufweisen, die größer als 350 g/l ist.

4. Der Weinsteinstabilisator gemäß Anspruch 3, wobei die Carboxymethylcelluloseagglomerate eine Schüttdichte besitzen, die größer als 400 g/l ist.

5. Der Weinsteinstabilisator gemäß einem der Ansprüche 1 bis 4, wobei die Carboxymethylcelluloseagglomerate einen Böschungswinkel besitzen, der weniger als 47 beträgt.

6. Der Weinsteinstabilisator gemäß Anspruch 5, wobei die Carboxymethylcelluloseagglomerate einen Böschungswinkel besitzen, der weniger als 45 beträgt.

7. Der Weinsteinstabilisator gemäß Anspruch 6, wobei die Carboxymethylcelluloseagglomerate einen Böschungswinkel besitzen, der weniger als 43 beträgt.

8. Der Weinsteinstabilisator gemäß einem der Ansprüche 1 bis 7, wobei die Carboxymethylcelluloseagglomerate ein Verhältnis von Schüttdichte, gemessen in g/l, zu dem Böschungswinkel, angegeben in °, besitzen, das größer als 8 ist.

9. Ein Verfahren zur Stabilisierung von Wein, um die Bildung von Weinstein zu verhindern, umfassend das Hinzugeben von Carboxymethylcelluloseagglomeraten zu dem Wein, wobei die Carboxymethylcelluloseagglomerate einen Restwassergehalt von weniger als 10 Gew.-% aufweisen und durch ein Verfahren, welches das Einbringen einer unbehandelten Carboxymethylcellulose in einen Mischer mit hoher Scherung, Zugabe von mindestens 20 Gew.-% Wasser zu der Carboxymethylcellulose ohne zusätzliche Oberflächenbehandlungs-additive, Bilden von Carboxymethylcelluloseagglomeraten und Trocknen der Agglomerate durch kontaktlose Trocknungsmaßnahmen umfasst, erhalten werden.

## Revendications

1. Un stabilisant contre les sels tartriques pour vin, comprenant des agglomérats de carboxyméthylcellulose ayant une teneur résiduelle en eau inférieure à 10 % en poids et qui se disperse aisément dans le vin sans formation d'agrégats, dans lequel les agglomérats de carboxyméthylcellulose ont été produits par un procédé comprenant l'introduction de carboxyméthylcellulose pure au sein d'un mélangeur à haut cisaillement, l'ajout d'au moins 20 pour cent d'eau en poids à la carboxyméthylcellulose sans additif de traitement de surface supplémentaire, la formation d'agglomérats de carboxyméthylcellulose et le séchage des agglomérats par des moyens de séchage sans-contact.

2. Le stabilisant contre les sels tartriques de la revendication 1, dans lequel les agglomérats de carboxyméthylcellulose ont un DS de 0,4 à 1,4.

3. Le stabilisant contre les sels tartriques de la revendication 1 ou de la revendication 2, dans lequel les agglomérats de carboxyméthylcellulose ont une masse volumique apparente qui est supérieure à 350 g/L.

4. Le stabilisant contre les sels tartriques de la revendication 3 dans lequel les agglomérats de carboxyméthylcellulose ont une masse volumique apparente qui est supérieure à 400 g/L.

5. Le stabilisant contre les sels tartriques de n'importe laquelle des revendications 1 à 4, dans lequel les agglomérats de carboxyméthylcellulose ont un angle de repos qui est inférieur à 47.

6. Le stabilisant contre les sels tartriques de la revendication 5, dans lequel les agglomérats de carboxyméthylcellulose ont un angle de repos qui est inférieur à 45.

7. Le stabilisant contre les sels tartriques de la revendication 6, dans lequel les agglomérats de carboxyméthylcellulose ont un angle de repos qui est inférieur à 43.

8. Le stabilisant contre les sels tartriques de n'importe laquelle des revendications 1 à 7, dans lequel les agglomérats de carboxyméthylcellulose ont un rapport de la masse volumique apparente, mesurée en g/L, à l'angle de repos, donné en °, qui est supérieur à 8.

9. Une méthode de stabilisation du vin pour prévenir la formation de sels tartriques, comprenant l'ajout d'agglomérats de carboxyméthylcellulose au vin, les agglomérats de carboxyméthylcellulose ayant une teneur résiduelle en eau inférieure à 10 % en poids et ayant été produits par un procédé comprenant l'introduction de carboxyméthylcellulose pure au sein d'un mélangeur à haut cisaillement, l'ajout d'au moins 20 pour cent d'eau en poids à la carboxyméthylcellulose sans additif de traitement de surface supplémentaire, la formation d'agglomérats de carboxyméthylcellulose et le séchage des agglomérats par des moyens de séchage sans-contact.
